# EUROPÄISCHE PATENTSCHRIFT

(11) **EP 1 853 476 B1**
(45) Veröffentlichungstag und Bekanntmachung des Hinweises auf die Patenterteilung: **18.02.2009**
(21) Anmeldenummer: 06775858.1
(22) Anmeldetag: 14.08.2006
(51) Int. Cl.: B62D 1/04, B62D 15/00

(54) **LENKRADANORDNUNG**
STEERING WHEEL ARRANGEMENT
SYSTEME VOLANT DE DIRECTION

(30) Priorität: 12.08.2005 DE 102005038855
(43) Veröffentlichungstag der Anmeldung: 14.11.2007
(73) Patentinhaber: Takata-Petri AG, 63743 Aschaffenburg (DE)
(72) Erfinder: ACKERT, Holger, 64291 Darmstadt (DE); BENDER, Jürgen, 60529 Frankfurt (DE); BISCHOFF, Michael, 63768 Hösbach (DE); GERMUTH-LÖFFLER, Michael, 63741 Aschaffenburg (DE); HELLERTFORTH, Thomas, 63741 Aschaffenburg (DE); MÜLLER, Horst, 61197 Florstadt (DE); SAUERWEIN, Thomas, 63868 Grosswallstadt (DE); VOLZ, Klaus, 63773 Goldbach (DE)
(74) Vertreter: Baumgärtel, Gunnar
(86) Internationale Anmeldenummer: PCT/DE2006/001429
(87) Internationale Veröffentlichungsnummer: WO 2007/019838

(56) Entgegenhaltungen:
- EP-A2- 0 822 119
- WO-A-20/04087484
- WO-A2-20/04053661
- DE-A1- 19 625 966
- DE-U1- 20 300 016
- US-A1- 2004 084 291

## Beschreibung

Die Erfindung betrifft eine Lenkradanordnung nach dem Oberbegriff des Anspruchs 1.

Eine solche Lenkradanordnung weist ein Lenkrad auf, welches drehbeweglich im Kraftfahrzeug anordenbar ist, eine eine Lenkachse definierende, stationäre Baugruppe, an der das Lenkrad um die Lenkachse drehbar gelagert ist, sowie am Lenkrad angeordnete erste Betätigungselemente zum Betätigen im oder am Kraftfahrzeug anordenbarer Funktionselemente des Kraftfahrzeuges, und mindestens ein zweites Betätigungselement zum Betätigen im oder am Kraftfahrzeug anordenbarer Funktionselemente des Kraftfahrzeuges, das an der stationären Baugruppe angeordnet ist, bzw. zum Betätigen zumindest eines Fahrrichtungsanzeigers des Kraftfahrzeuges dient. Eine derartige Lenkradanordnung wird beispielsweise in der EP 0 822 119 B1 beschrieben.

Bei derartigen bekannten Lenkradanordnungen in Fahrzeugen mit komfortabler Ausstattung befinden sich sowohl eine erste Steuerelektronik im Lenkrad als auch eine weitere zweite Steuerelektronik auf der Seite der stationären Baugruppe der Lenkradanordnung. Bei der stationären Baugruppe kann es sich beispielsweise um eine eine Lenkspindel umgebende Lenksäule handeln, wobei üblicherweise eine lenksäulenseitige Steuerelektronik mit einem Betätigungselement zum Betätigen eines Fahrtrichtungsanzeigers (Blinkerschalter), einem Lenkwinkelsensor und weiteren Funktionselementen ein einheitliches, an einem dem Lenkrad zugewandten Ende der Lenksäule angeordnetes Montagemodul bildet und weitere, beispielsweise im Lenkrad angeordnete Komponenten mit einer lenkradseitigen, zweiten Steuerelektronik ein unabhängiges Lenkradmodul bilden.

Der Erfindung liegt daher das Problem zugrunde eine kostengünstige und komfortable Lenkradanordnung bereitzustellen.

Das erfindungsgemäße Problem wird durch eine Lenkradanordnung mit den Merkmalen des Anspruchs 1 gelöst.

Danach ist eine zentrale, im Lenkrad angeordnete Steuerelektronik vorgesehen, die sowohl zur Steuerung der ersten Betätigungselemente als auch zur Steuerung des mindestens einen zweiten Betätigungselementes eingerichtet ist.

Der Vorteil dieser Lösung des erfindungsgemäßen Problems besteht darin, dass auf Seiten der stationären Baugruppe der Lenkradanordnung keine Steuerelektronik notwendig ist. Diese wird in das Lenkrad verlegt, d.h., dort angeordnet, so dass im Ergebnis eine Lenkradanordnung mit einer einheitlichen Steuerelektronik geschaffen wird. Auch bei einem Verbleib des zumindest einen zweiten Betätigungselementes an der stationären Baugruppe ist der vorstehend beschriebene Vorteil gegeben, da hier lediglich eine einfache Anbindung des zweiten Betätigungselementes an die einheitliche im Lenkrad angeordnete Steuerelektronik hergestellt werden muss. Eine solche Anbindung kann beispielsweise mittels einer einfachen elektrischen Verbindung realisiert werden.

In einer besonders bevorzugten Ausführungsform der Erfindung ist ein Lenkwinkelsensor vorgesehen, der zum Detektieren des Lenkwinkels des Lenkrades eingerichtet ist. Hierzu detektiert der vorzugsweise am Lenkrad angeordnete Lenkwinkelsensor Markierungen in Form eines absoluten oder relativen Codes, welche an der stationären Baugruppe vorgesehen sein können, so dass eine Absolut- oder Relativbewegung (Drehung) des Lenkrades um die Lenkachse messbar ist. Derartige Lenkwinkelsensoren sind beispielsweise aus der DE 197 58 104 A1 und der DE 197 05 312 A1 bekannt. Weiterhin ist der Lenkwinkelsensor bevorzugt mit der Steuerelektronik verbunden, die zur Steuerung des Lenkwinkelsensors eingerichtet ist.

Auf diese Weise kann ein Funktionselement des Kraftfahrzeuges unter Zusammenwirkung mit dem Lenkwinkelsensor von der Steuerelektronik gesteuert werden. Zum Steuern von Funktions- und den ersten und zweiten Betätigungselementen weist die Steuerelektronik einen Mikrocontroller auf, wobei unter einem Steuern zumindest ein Aktivieren, Deaktivieren oder Parametrieren jener Funktions- und Betätigungselemente verstanden wird. Bei einem als Fahrtrichtungsanzeiger ausgebildeten Funktionselement kann somit beispielsweise ein Rücksetzen eines gesetzten Fahrtrichtungsanzeigers automatisch in Abhängigkeit vom Lenkwinkel erfolgen (z. B. wenn das Lenkrad nach einem eingeschlagenen Zustand zur Änderung der Fahrtrichtung wieder in Geradeausfahrtstellung positioniert wird).

In einer weiteren Variante der Erfindung ist die Steuerelektronik dazu vorgesehen und eingerichtet, zumindest eines der ersten Betätigungselemente und / oder das zumindest eine zweite Betätigungselement mit Hilfe von Informationen zu Steuern, die einen Zustand des Kraftfahrzeuges oder eines Fahrers kennzeichnen, wie z.B. der Lenkwinkel, d.h., derjenige Winkel, um den das Lenkrad in eine Drehrichtung des Lenkrades relativ zur Geradeausfahrtstellung des Lenkrades eingeschlagen ist, eine Fahrtrichtung des Kraftfahrzeuges, die Geschwindigkeit des Kraftfahrzeuges, eine Drehrate des Lenkrades oder eine Griffposition der Hände eines Fahrers am Lenkrad, d.h., Orte auf einer Griffoberfläche des Lenkrades (z.B. der Oberfläche eines Lenkradkranzes) an denen sich die Hände eines Fahrers befinden.

Vorzugsweise weist die Steuerelektronik zur Übertragung von Steuersignalen an eine fahrzeugseitige Elektronik zumindest eine Multiplex-Schnittstelle auf, die auch dazu dienen kann, Informationen über das Kraftfahrzeug an die Steuerelektronik zu übermitteln. Bevorzugt wird eine elektrische Verbindung zwischen dem Lenkrad und der stationären Baugruppe durch eine Signalübertragungseinheit hergestellt, d.h., die Signalübertragungseinheit leitet die Multiplex-Schnittstelle zur stationären Baugruppe, durch und dient ferner zur Energieübertragung ins Lenkrad. Die Signalübertragungseinheit kann als eine einfache Kabel- oder Spiralkabelverbindung ausgebildet sein, oder in Form einer Flachleitung in einer z.B. zylindrisch ausgeformten Dose angeordnet sein, die zum Schutz der Flachleitung dient. Derartige Signalübertragungseinheiten in Form von Kabelverbindungen sind beispielsweise aus der DE 195 06 865 C1 und der DE 195 25 928 A1 bekannt.

In einer bevorzugten Variante der Erfindung bilden die Steuerelektronik, der Lenkwinkelsensor und die Signalübertragungseinheit eine Funktionseinheit, die als ein einheitliches Modul in das Lenkrad montierbar ist, was die Montage jener Komponenten erleichtert und sich insgesamt kostensparend auswirkt.

Bevorzugt ist zumindest eines der ersten, am Lenkrad angeordneten Betätigungselemente dazu eingerichtet und vorgesehen entlang einer Vielzahl von Betätigungsrichtungen betätigt zu werden, wobei den einzelnen Betätigungsrichtungen jeweils ein richtungsabhängiges Ausgangssignal zum Einwirken auf eine Kraftfahrzeugkomponente zugeordnet ist. Das Einwirken umfasst dabei sowohl ein Aktivieren bzw. Deaktivieren als auch ein Regeln (Verstellen) der Kraftfahrzeugkomponente. Insbesondere umfasst ein derartiges Einwirken eine Auswahl der zu verstellenden Kraftfahrzeugkomponente aus einer Mehrzahl von Kraftfahrzeugkomponenten.

Vorzugsweise ist eine Steuerelektronik zum Steuern des zumindest einen ersten Betätigungselementes vorgesehen derart, dass die einzelnen Betätigungsrichtungen, entlang derer das erste Betätigungselement zum Erzeugen des jeweils zugeordneten Ausgangssignals betätigbar ist - bezogen auf ein fahrzeugfestes Koordinatensystem - unabhängig von einem momentanen Lenkwinkel des Lenkrades konstant sind. Oder anders gesagt, zur Erzeugung eines vorgegebenen, richtungsabhängigen Ausgangssignals ist das erste Betätigungselement unabhängig vom momentanen Lenkwinkel jeweils entlang ein und derselben Betätigungsrichtung auszulenken. Bei der Steuerelektronik handelt es sich insbesondere um die zentrale, im Lenkrad angeordnete Steuerelektronik. Der momentane Lenkwinkel wird mittels des Lenkwinkelsensors erfasst.

Das Konzept eines am Lenkrad vorgesehenen Betätigungselementes, das derart ansteuerbar ist, dass dessen Bedienung ungeachtet der Orientierung des Lenkrades in Bezug auf ein fahrzeugfestes Koordinatensystem stets gleich bleibt, stellt einen eigenständigen Erfindungsgedanken dar und kann auch unabhängig von der vorliegenden Lenkradanordnung verwirklicht werden. Hierzu kann allgemein bei einem Lenkrad für ein Kraftfahrzeug, das um eine Lenkachse drehbar ist und ein am Lenkrad angeordnetes Betätigungselement aufweist, eine Steuereinheit (Steuerelektronik) zum derartigen Steuern des Betätigungselementes vorgesehen sein, dass die einzelnen Betätigungsrichtungen, entlang derer das erste Betätigungselement zum Erzeugen des jeweils zugeordneten Ausgangssignals betätigbar ist - bezogen auf ein fahrzeugfestes Koordinatensystem - unabhängig von einem momentanen Lenkwinkel des Lenkrades konstant sind.

In einer besonders bevorzugten Variante der Erfindung ist zumindest eines der ersten Betätigungsmittel und / oder das zumindest eine zweite Betätigungselement als ein Joystick ausgebildet, mit einem Bedienhebel, der um eine Mehrzahl von Achsen in eine entsprechende Mehrzahl von Kipprichtungen (Betätigungsrichtungen) kippbar ist, wobei die Achsen und die Kipprichtungen in einer gemeinsamen zweidimensionalen Bedienebene liegen. Ein derartiger Joystick kann beispielsweise einen längs erstreckt entlang einer Richtung ausgebildeten Bedienhebel aufweisen, der in einem neutralen, d.h., nicht geneigten Zustand senkrecht zur Bedienebene des Joysticks verläuft und mit einem in der Bedienebene liegenden freien Ende kippbar um jede der Achsen gelagert ist. Hierbei kann mittels der Steuerelektronik der Joystick derart angesteuert werden, dass eine Ansteuerung von Funktionselementen (z.B. Aktivieren, Deaktivieren, Einstellen usw.) des Kraftfahrzeuges in Abhängigkeit von den Kipprichtungen des Bedienhebels realisiert ist.

Die ersten Betätigungselemente und / oder das zumindest eine zweite Betätigungselement können auch in Form weiterer bekannter Schaltelemente wie z.B. Drehencodern (Drehdrückstellern), einfachen Schaltern, Schalterarrays, oder Folienschaltern ausgebildet sein.

Vorzugsweise schneiden sich die einzelnen Achsen um die der Bedienhebel des Joysticks kippbar ist, in einem gemeinsamen Schnittpunkt, wobei der Schnittpunkt quer zur Lenkachse bevorzugt beabstandet zur Lenkachse des Lenkrades angeordnet ist.

Weiterhin sind bevorzugt die Kipprichtungen in einem relativ zum Joystick ruhenden, die Bedienebene aufspannenden Bedienkoordinatensystem, welches eine y-Achse und eine dazu orthogonale x-Achse aufweist, eindeutig zweidimensionalen Vektoren zuordenbar, so dass die Kipprichtungen in eindeutiger Weise von der Steuerelektronik zum Steuern von Funktionselementen des Kraftfahrzeuges weiterverarbeitbar sind. Der Ursprung des Bedienkoordinatensystems fällt bevorzugt mit dem Schnittpunkt der Achsen zusammen. Es ist natürlich auch denkbar, dass die Steuerelektronik dazu eingerichtet ist, die Zeitspanne, über die der Bedienhebel des Joysticks in eine bestimmte Kipprichtung gekippt war, zu registrieren und zur Steuerung, insbesondere Einstellung von Funktionselementen zu verwenden.

In einer Variante der Erfindung ist bei einem am Lenkrad angeordneten Joystick die Steuerelektronik dazu vorgesehen und eingerichtet, mittels des Lenkwinkelsensors das Bedienkoordinatensystem derart auszurichten, dass die Orientierung der y-Achse unabhängig vom Lenkwinkel stets der Orientierung der y-Achse bei Geradeausfahrtstellung des Lenkrades entspricht. Dies ist vorteilhaft, da somit unabhängig von einer Stellung des Lenkrades, d.h., unabhängig vom Lenkwinkel, eine Bewegung des Bedienhebels des Joysticks entlang einer beispielsweise horizontalen Richtung stets die gleiche Wirkung auf ein angesteuertes Funktionselement, bzw. einer Funktion dieses Funktionselementes zur Folge hat. Somit kann insbesondere ein Fahrtrichtungsanzeiger unabhängig vom Lenkwinkel des Lenkrades mittels des Joysticks bedient werden.

In einer weiteren Variante der Erfindung ist ein Anzeigeelement vorgesehen, welches zumindest zum Anzeigen der Kipprichtungen dient, d.h., das Anzeigeelement zeigt die Kipprichtung an, in die der Bedienhebel des Joysticks gekippt ist.

Bevorzugt ist das Anzeigelement am Lenkrad angeordnet, wobei es vorzugsweise bei einem am Lenkrad angeordneten Joystick um den Joystick herum gruppiert ist, wobei bevorzugt das Anzeigeelement konzentrisch zum Joystick angeordnet ist.

In einer bevorzugten Variante der Erfindung weist das Anzeigeelement eine Mehrzahl von einzeln ansteuerbaren Segmenten auf. Die einzelnen Segmente können aneinander angrenzen oder aber beabstandet zueinander am Lenkrad angeordnet sein. Es ist hierbei denkbar, das Anzeigelement mit seinen Segmenten bündig in eine Oberfläche des Lenkrades, beispielsweise in eine Oberfläche eines Lenkradkranzes, einzulassen.

In einer besonders bevorzugten Variante der Erfindung ist die Steuerelektronik bei einem am Lenkrad angeordneten Joystick dazu vorgesehen und eingerichtet, mittels des Lenkwinkelsensors die einzelnen Segmente des Anzeigeelementes derart anzusteuern, dass eine Ausrichtung eines einer Kipprichtung zugeordneten Segmentes bezüglich des Ursprungs des Bedienkoordinatensystems unabhängig vom momentanen Lenkwinkel des Lenkrades ist. Unter einer Ausrichtung des Segmentes in Bezug auf den Ursprung des Bedienkoordinatensystems wird hierbei die Orientierung einer Richtung bezüglich eines fahrzeugfesten Koordinatensystems verstanden, die vom Ursprung des Bedienkoordinatensystems aus zum betrachteten Segment weist.

In einer weiteren Variante der Erfindung ist die Steuerelektronik dazu vorgesehen und eingerichtet, einen vor einem Deaktivieren der Steuerelektronik mittels des Lenkwinkelsensors bestimmten Lenkwinkel zu speichern. Dies ist vorteilhaft, da ein solcher Lenkwinkel nach einem erneuten Aktivieren der Steuerelektronik wieder zur Verfügung steht. Üblicherweise wird hierbei das Aktivieren und Deaktivieren der Steuerelektronik an einen Startvorgang des Kraftfahrzeuges gekoppelt.

Bevorzugt weist das Lenkrad einen in einer Erstreckungsebene verlaufenden Lenkradkranz auf, der über Speichen mit einem Lenkradkörper verbunden ist.

In einem weiteren Ausführungsbeispiel der Erfindung ist ein erstes Bedienelement vorgesehen, das in Richtung der Lenkachse zwischen der Erstreckungsebene des Lenkradkranzes und der stationären Baugruppe am Lenkrad angeordnet ist. Ein solches erstes Bedienelement kann sowohl zur Gruppe der ersten Betätigungselemente als auch zur Gruppe des zweiten Betätigungselementes gehören, insofern jenes am Lenkrad angeordnet ist.

Vorzugsweise weist das erste Bedienelement einen Berührbereich auf, an dem es zum Betätigen berührbar ist. Es ist denkbar, dass das erste Bedienelement entlang einer Richtung durch ein Drücken (beispielsweise von einem Fahrer weg) des Berührbereiches und optional durch ein Ziehen des Berührbereiches in einer entgegengesetzten Richtung betätigbar ist. Weiterhin ist der Berührbereich in einer parallel zur Erstreckungsebene des Lenkradkranzes verlaufenden Ebene bevorzugt zwischen dem Lenkradkranz und einer Speiche des Lenkrades angeordnet oder zwischen dem Lenkradkranz und dem Lenkradkörper. Dies ermöglicht bei entsprechender Auslegung des Berührbereiches beispielsweise ein Betätigen eines solchen ersten Bedienelementes mit Hilfe eines Daumens (Drücken) oder Zeige- bzw. Mittelfingers (Ziehen), bei ansonsten in Griffposition am Lenkrad befindlichen Händen.

Bevorzugt ist das erste Bedienelement an einer Speiche des Lenkrades beweglich gelagert oder alternativ beweglich am Lenkradkörper gelagert. Vorzugsweise ist das erste Bedienelement hierbei derart am Lenkrad gelagert, dass der Berührbereich entlang einer parallel zur Lenkachse orientierten Richtung bewegbar ist.

In einem weiteren Ausführungsbeispiel der Erfindung sind weitere erste Bedienelemente vorgesehen, die jeweils einen Berührbereich aufweisen, wobei diese weiteren Berührbereiche in der Ebene angeordnet sind, in der der Berührbereich des ersten Bedienelementes angeordnet ist.

Die weiteren ersten Bedienelemente sind sowohl der Gruppe der ersten Betätigungselemente zurechenbar als auch der Gruppe des oder der zweiten Betätigungselemente, falls letztere am Lenkrad angeordnet sind.

Bevorzugt sind der Berührbereich des ersten Bedienelementes und die weiteren Berührbereiche der weiteren ersten Bedienelemente (im Folgenden Berührbereiche der ersten Bedienelemente genannt) derart entlang einer den Lenkradkörper umgreifenden Bahn angeordnet, dass unabhängig vom momentanen Lenkwinkel des Lenkrades ein überwiegender Teil zumindest eines ersten Berührbereiches von einem Fahrer aus betrachtet auf einer rechten Seite des Lenkrades angeordnet ist, und dass unabhängig vom momentanen Lenkwinkel des Lenkrades ein überwiegender Teil zumindest eines zweiten Berührbereiches vom Fahrer aus betrachtet auf einer linken Seite des Lenkrades angeordnet ist. Hierbei wird das Lenkrad durch eine fahrzeugfeste Ebene in die rechte und die linke Seite unterteilt, wobei die Ebene durch die Lenkachse und eine vertikale, die Lenkachse schneidende Achse gebildet wird. Diese Definition der rechten und der Linken Seite des Lenkrades ist also unabhängig vom Lenkwinkel des Lenkrades.

Weiterhin ist bevorzugt die Steuerelektronik dazu vorgesehen und eingerichtet, mittels des Lenkwinkelsensors die einzelnen Berührbereiche der ersten Bedienelemente so anzusteuern, dass auf Grund einer Betätigung des zumindest einen ersten Berührbereiches eine Fahrrichtungsanzeige des Kraftfahrzeuges unabhängig vom momentanen Lenkwinkel eine Fahrtrichtungsänderung nach rechts anzeigt, und dass unabhängig vom momentanen Lenkwinkel eine Fahrrichtungsanzeige des Kraftfahrzeuges auf Grund einer Betätigung des zumindest einen zweiten Berührbereiches eine Fahrtrichtungsänderung nach links anzeigt.

Die ersten Bedienelemente können insgesamt sowohl zur Gruppe der ersten Betätigungselemente als auch zur Gruppe des zweiten Betätigungselementes gehören, d.h., dass zumindest eine zweite Betätigungselement bilden, insofern jenes am Lenkrad angeordnet ist.

Weiterhin stellen die vorstehenden, lenkwinkelabhängig gesteuerten ersten Bedienelemente ein eigenständiges Konzept dar, dass unabhängig von der vorliegenden Lenkradanordnung verwirklichbar ist, z.B. bei einem Lenkrad mit ersten Bedienelementen zum Steuern von Kraftfahrzeugskomponenten, wobei die ersten Bedienelemente jeweils einen Berührbereich aufweisen, über den sie durch Berühren (z.B. Drücken) betätigbar sind.

In einer weiteren Variante der Erfindung ist ein am Lenkrad angeordnetes zweites Bedienelement vorgesehen, welches derart am Lenkrad gelagert ist, dass seine Orientierung im Raum beim Drehen des Lenkrades um die Lenkachse, d.h., beim Verändern des Lenkwinkels, unverändert bleibt. Ein solches zweites Bedienelement kann ebenfalls sowohl zur Gruppe der ersten Betätigungselemente als auch zur Gruppe des zweiten Betätigungselementes gehören, insofern dieses am Lenkrad angeordnet ist.

Ein derartiges zweites Bedienelement kann auch unabhängig von der vorliegenden, erfindungsgemäßen Lenkradanordnung verwirklicht werden, z.B. bei einem drehbaren Lenkrad für ein Kraftfahrzeug, mit einem Bedienelement zum Bedienen einer Kraftfahrzeugkomponente.

Bevorzugt ist das zweite Bedienelement an einem Element des Lenkrades angeordnet, welches derart beweglich am Lenkrad gelagert ist, beispielsweise über eine motorische Drehregelung, dass seine räumliche Orientierung unabhängig vom Lenkwinkel des Lenkrades unverändert bleibt, d.h., stationär ist. Eine Regelung dieses Elementes erfolgt vorzugsweise mittels der Steuerelektronik, welche dazu vorgesehen und eingerichtet ist, unter Mitwirkung des Lenkwinkelsensors die Orientierung des Elementes des Lenkrades derart zu steuern, dass sie unabhängig vom momentanen Lenkwinkel des Lenkrades ausgerichtet ist.

Weiterhin ist bevorzugt jenes Element zentral am Lenkrad angeordnet und vorzugsweise als ein Teil des Lenkradkörpers ausgebildet, insbesondere als ein am Lenkradkörper gelagertes Airbagmodul.

Vorzugsweise dienen die ersten Betätigungselemente und das zumindest eine zweite Betätigungselement zum Betätigen im oder am Kraftfahrzeug anordenbarer Funktionselemente, insbesondere zur Bedienung eines Fahrtrichtungsanzeigers, einer Hupe, eines Radios, eines Tempomats zur Regelung der Fahrzeuggeschwindigkeit, eines Scheibenwischers oder einer Beleuchtung des Kraftfahrzeuges. Die Betätigungselemente können natürlich auch multifunktional ausgebildet sein und zur Bedienung eine Mehrzahl dieser Funktionskomponenten eingerichtet sein.

Alternativ zur Anordnung der ersten Betätigungselemente am Lenkrad und des zumindest einen zweiten Betätigungselementes an der stationären Baugruppe (z.B. Lenksäule), können sowohl die ersten Betätigungselemente als auch das zumindest eine zweite Betätigungselement am Lenkrad angeordnet sein, wobei eine zentrale, im Lenkrad angeordnete Steuerelektronik vorgesehen ist, die sowohl zur Steuerung der ersten Betätigungselemente als auch zur Steuerung des mindestens einen zweiten Betätigungselementes eingerichtet ist.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Darstellung einer Variante einer erfindungsgemäßen Lenkradanordnung,
- Fig. 2: eine schematische Darstellung einer weiteren Variante einer erfindungsgemäßen Lenkradanordnung,
- Fig. 3: eine schematische Ansicht eines Lenkrades mit am Lenkrad angeordneten Bedienelementen,
- Fig. 4: eine schematische Ansicht einer Abwandlung des in der Figur 3 gezeigten Lenkrades,
- Fig. 5: eine schematische Seitenansicht eines Lenkrades der in der Figur 4 gezeigten Art.
- Fig. 6A: eine schematische Ansicht segmenthaft ausgebildeter Berührbereiche von Bedienelementen, die ringförmig entlang eines Lenkradkörpers angeordnet sind.
- Fig. 6B: eine schematische Ansicht der in der Figur 6A gezeigten Berührbereiche bei einem Lenkrad mit einem von Null verschiedenen Lenkwinkel, der kleiner als 90° ist.
- Fig. 6C: eine schematische Ansicht der in der Figur 6A und 6B gezeigten Berührbereiche bei einem von Null verschiedenen Lenkwinkel, der größer als 90° , aber kleiner als 180° ist.
- Fig. 6D: eine schematische Ansicht der in der Figur 6A bis 6C gezeigten Berührbereiche bei einem Lenkwinkel, der 180° beträgt.
- Fig. 7A: eine schematische Ansicht eines in Geradeausfahrtstellung befindlichen Lenkrades der in der Figur 3 bis 5 gezeigten Art, mit einem Joystick, und
- Fig. 7B: eine schematische Ansicht des in der Figur 7A gezeigten Lenkrades mit einem Lenkwinkel von 90°.

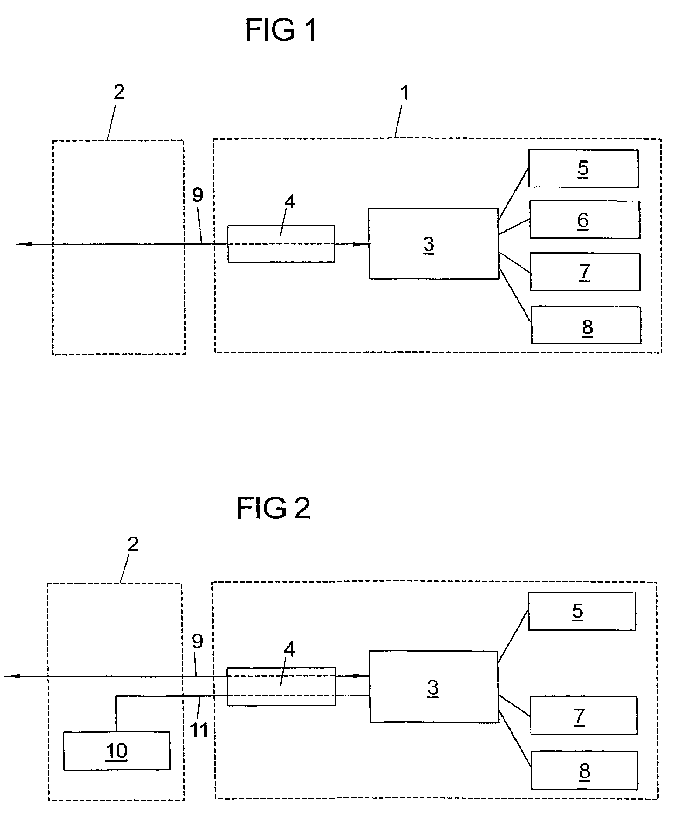

Figur 1 zeigt eine schematische Darstellung einer Lenkradanordnung mit einem Lenkrad 1, das drehbeweglich um eine Lenkachse an einer stationären Baugruppe 2 gelagert ist. Bei einer solchen Baugruppe 2 kann es sich beispielsweise um eine Lenksäule handeln, die eine entlang der Lenkachse verlaufende Lenkspindel aufnimmt, die zur Übertragung einer Drehbewegung des Lenkrades 1 auf die Vorderräder des Kraftfahrzeuges dient. Üblicherweise ist das Lenkrad 1 in diesem Fall über eine einzelne Mutter an der Lenkspindel festgelegt. Eine Drehbewegung des Lenkrades 1 kann allerdings auch rein elektronisch auf die Vorderräder übertragen werden (steer by wire). Hierzu ist das Lenkrad an der stationären Baugruppe 2 um eine Lenkachse drehbar gelagert, wobei der Lenkwinkel geeignet sensiert und an eine Lenkelektronik zum Steuern des Kraftfahrzeuges übermittelt wird.

Der Lenkwinkel wird zweckmäßigerweise derart kalibriert, dass er in Geradeausfahrtstellung 0° beträgt und bei Drehung des Lenkrades (durch einen Fahrer) im Uhrzeigersinn anwächst. Der Lenkwinkel ist mittels eines am Lenkrad 1 angeordneten Lenkwinkelsensors 5 bestimmbar, der mit der Steuerelektronik 3 verbunden ist.

Weiterhin sind am Lenkrad 1, ein erstes Betätigungselement 7 in Form eines Joysticks, ein zweites Betätigungselement 6 zum Bedienen eines Fahrtrichtungsanzeigers (Blinkerschalter) sowie weitere erste Betätigungselemente 8 zur Betätigung eines Radios, eines Tempomats usw. angeordnet. Diese Betätigungselemente sind ebenfalls mit der Steuerelektronik 3 verbunden und werden von dieser in Abhängigkeit von Informationen über einen Fahrzustand oder einen Kraftfahrzeugzustand, beispielsweise den von dem Lenkwinkelsensor 5 bestimmen Lenkwinkel, gesteuert. Unter einem Steuern dieser Betätigungselemente wird hierbei ein Aktivieren, Deaktivieren und Parametrieren der Betätigungselemente verstanden. Die Kommunikation mit einer fahrzeugseitigen Elektronik geschieht über eine Multiplex-Schnittstelle 9, die von einer Signalübertragungseinheit 4, welche zur elektrischen Anbindung des Lenkrades 1 an die stationäre Baugruppe 2 dient, zu einer zentralen, außerhalb der stationären Baugruppe gelegenen fahrzeugseitigen Elektronik durchgeleitet wird. Über die Multiplex-Schnittstelle 9 werden sowohl Steuersignale an im oder am Kraftfahrzeug angeordnete Funktionselemente übermittelt als auch Informationen über Fahr- oder Kraftfahrzeugzustände an die Steuerelektronik 3 übermittelt.

Bei der in der Figur 1 gezeigten Lenkradanordnung sind somit sämtliche Betätigungselemente im Lenkrad integriert und werden von einer zentralen Steuerelektronik angesteuert. Die stationäre Baugruppe 2 (beispielsweise Lenksäule) ist frei von Elektroniken, so dass eine größere Designfreiheit bezüglich der stationären Baugruppe 2 besteht und weiterhin ein hierdurch gewonnener Bauraum beispielsweise für Sicherheitskomponenten (z.B. einem Knieairbag) verwendet werden kann.

Figur 2 zeigt eine Abwandlung der in der Figur 1 gezeigten Lenkradanordnung, bei der im Unterschied zur Figur 1 ein zweites Betätigungselement 10, welches zur Betätigung eines Fahrtrichtungsanzeigers dient, an der stationären Baugruppe 2 verbleibt. Dieses zweite Betätigungselement 10 wird hierbei mittels einer elektrischen Verbindung 11 an die Steuerelektronik 3 angebunden, welche auf vorstehend beschriebene Weise über eine Multiplex-Schnittstelle 9 mit in einer Kraftfahrtzeugsumgebung des Lenkrades 1 angeordneten Funktionselementen kommunizieren kann. Auch hier dient eine einheitliche, zentrale Steuerelektronik 3 zum Steuern sämtlicher erster und zweiter Betätigungselemente 6, 7, 8, und 10.

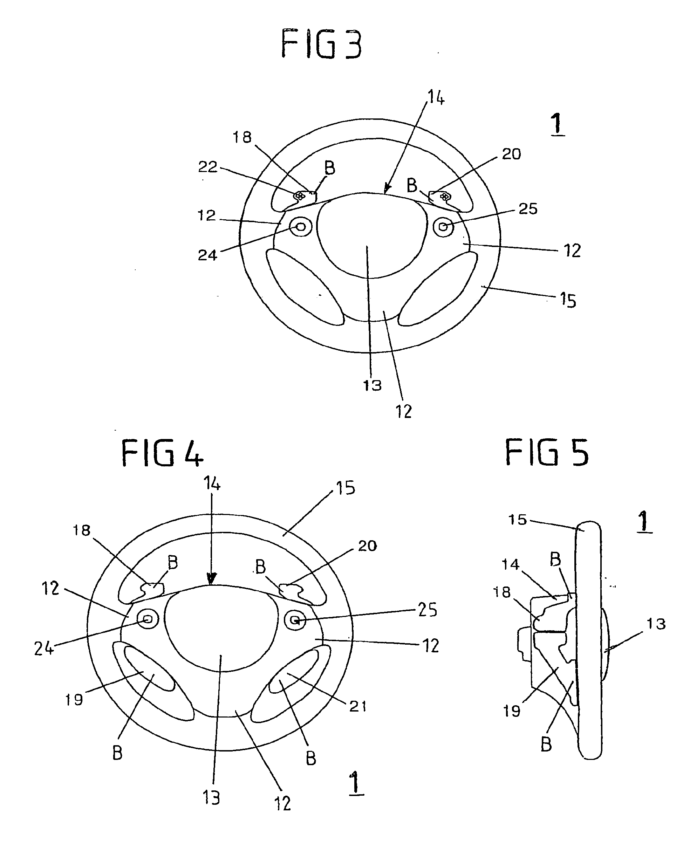

Figur 3 zeigt eine Draufsicht auf ein Lenkrad 1 mit einem ringförmig ausgebildeten Lenkradkranz 15, der sich in einer Erstreckungsebene erstreckt, die mit der Papierebene zusammenfällt. Der Lenkradkranz 15 ist im Wesentlichen konzentrisch zur Lenkachse ausgebildet, welche senkrecht zu der Erstreckungsebene des Lenkradkranzes verläuft, und umgibt einen zum Lenkradkranz 15 beabstandeten Lenkradkörper 14, mit einer flächig, rundlich ausgebildeten Lenkradkappe 13, die sich entlang der Erstreckungsebene des Lenkradkranzes 15 erstreckt. Der Lenkradkörper 14 ist über drei Speichen 12, die ebenfalls in der Erstreckungsebene des Lenkradkranzes 15 angeordnet sind, mit dem Lenkradkranz 15 verbunden. Hierbei verläuft eine der drei Speichen 12 in Geradeausfahrtstellung des Lenkrades 1 von einem unterhalb der Lenkachse gelegenen Abschnitt des Lenkradkranzes 15 in einer vertikalen auf die Lenkachse gerichteten Richtung zum Lenkradkörper 14, wobei sich ihr Querschnitt (senkrecht zu jener Richtung) zum Lenkradkörper 14 hin vergrößert. Die beiden anderen Speichen 12 stehen in Geradeausfahrtstellung des Lenkrades 1 zu beiden Seiten der Lenkachse entlang einer horizontalen in der Erstreckungsebene des Lenkradkranzes 15 gelegenen Achse von dem Lenkradkörper 14 ab und verlaufen, sich verjüngend, zum Lenkradkranz 15, so dass die drei Speichen 12 insgesamt T-förmig zueinander angeordnet sind.

In Geradausfahrtstellung des Lenkrades 1 befinden sich entlang der vorstehend beschriebenen horizontalen Achse zu beiden Seiten der Lenkradkappe 13, die beispielsweise zum Abdecken eines Airbagmoduls dient, jeweils ein Joystick 24, 25, die jeweils einen Bedienhebel aufweisen, der sich in einer parallel zur Lenkachse orientierten Richtung erstreckt. Die beiden Bedienhebel der Joysticks 24, 25 sind mit jeweils an einem dem Lenkrad 1 zugewandten Ende kippbar um eine Mehrzahl von Achsen gelagert, die in einer Bedienebene verlaufen, die im Wesentlichen mit der Erstreckungsebene des Lenkradkranzes 15 zusammenfällt. Diese Achsen können vorgegeben oder frei wählbar sein.

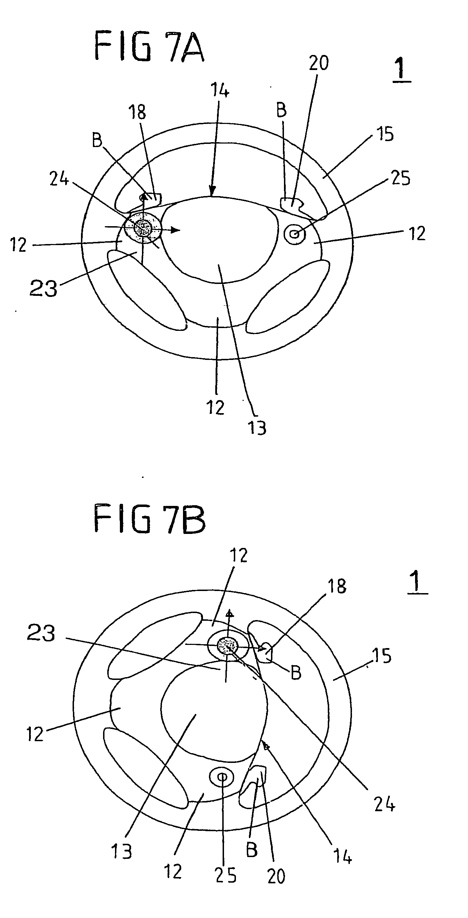

Figur 7A zeigt im Zusammenhang mit Figur 7B exemplarisch an Hand des Joysticks 24 die Ansteuerung des Joysticks 24 mittels der Steuerelektronik 3 und des Lenkwinkelsensors 5. Diese geschieht so, dass ein dem Joystick 24 durch die Steuerelektronik 3 zugeordnetes Bedienkoordinatensystem 23 stationär ist. D.h., die Ausrichtung des Bedienkoordinatensystems 23 bleibt unabhängig vom Wert des Lenkwinkels stets gleich, wie schematisch in Figur 7A (Lenkwinkel von 0°) und Figur 7B (Lenkwinkel von 90°) gezeigt.

Auf diese Weise hat unabhängig vom Lenkwinkel ein Bewegen oder Kippen des Joysticks 24, beispielsweise entlang der horizontalen Achse nach rechts, stets die gleiche Wirkung, welche natürlich durch die Steuerelektronik festlegbar ist. Die Joysticks 24, 25 können beispielsweise zur Bedienung eines Fahrtrichtungsanzeigers verwendet werden. Letzteres ist auch in Kombination mit herkömmlichen an der stationären Baugruppe 2 angeordneten Betätigungselementen für einen Fahrtrichtungsanzeiger denkbar.

Weiterhin sind gemäß Figur 3 erste Bedienelemente 18, 20 am Lenkrad 1 angeordnet, die gemäß Figur 5 hebelförmig ausgebildet sind und in Geradeausfahrstellung des Lenkrades 1 an zwei einander abgewandten Seiten des Lenkradkörpers 14 beweglich gelagert sind, wobei die beiden Seiten im Wesentlichen senkrecht zur Erstreckungsebene des Lenkradkranzes 15 verlaufen und parallel zur vertikalen Fahrzeugachse orientiert sind.

Die ersten Bedienelemente 18, 20 weisen Berührbereiche B auf, mit jeweils einer einem Fahrer zugewandt Seite, wobei die Berührbereiche B in einer parallel zur Erstreckungsebene des Lenkradkranzes 15 verlaufenden Ebene zwischen den horizontalen Speichen 12 und einem obersten Abschnitt des Lenkradkranzes 15 angeordnet sind (in Geradeausfahrtstellung des Lenkrades 1). Die Ebene, in der sich die beiden Berührbereiche B erstrecken, ist in Richtung der Lenkachse zwischen der Erstreckungsebene des Lenkradkranzes 15 und der stationären Baugruppe 2 angeordnet. Die beiden Betätigungselemente 18, 20 sind derart ausgebildet, dass die Berührbereiche B in einer jeweils parallel zur Lenkachse verlaufenden Richtung drückbar bzw. ziehbar sind, so dass beispielsweise eine Fahrtrichtungsanzeige zum Anzeigen einer Fahrtrichtungsänderung nach rechts mittels Drücken des Berührbereiches B des ersten Bedienelementes 20 in Geradeausfahrtrichtung des Kraftfahrzeuges aktiviert und mittels Ziehen (entgegen der Geradeausfahrtrichtung des Kraftfahrzeuges) deaktiviert werden kann.

Mittels an den ersten Bedienelementen 18, 20 angeordneter Anzeigelemente 22, welche an den sichtbaren Berührbereichen B der ersten Bedienelemente 18, 20 ausgebildet sind, können Fahrzustandsinformationen oder beispielsweise Zustände der ersten Bedienelemente 18, 20 angezeigt werden.

Figur 4 zeigt eine Erweiterung des vorstehend beschriebenen Bedienkonzeptes. In der Figur 4 sind im Unterschied zur Figur 3 zwei weitere erste Bedienelemente 19, 21 am Lenkrad 1 angeordnet, die ebenfalls zum Aktivieren oder Deaktivieren eines Fahrtrichtungsanzeigers dienen können. Diese beiden weiteren ersten Bedienelemente 19, 21 sind ebenfalls an den beiden einander abgewandten Seiten des Lenkradkörpers 14 beweglich gelagert und weisen länglich ausgeformte, entlang des Lenkradkörpers 14 erstreckte Berührbereiche B auf, die parallel zur Erstreckungsebene des Lenkradkranzes 15 eine größere Fläche umfassen als die Berührbereiche B der ersten Bedienelemente 18, 20. Bei Geradeausfahrtstellung des Lenkrades 1 verlaufen die Berührbereiche B der weiteren ersten Bedienelemente 19, 21 unterhalb der horizontalen Speichen 12 entlang des Lenkradkörpers 14 und liegen jeweils einem der oberhalb der horizontalen Speichen 12 gelegenen Berührbereiche B der ersten Bedienelemente 18, 20 gegenüber. Die weiteren ersten Bedienelemente 19, 21 können in gleicher Weise wie die ersten Bedienelemente 18, 20 betätigt werden und natürlich ebenfalls zum Ansteuern eines Fahrtrichtungsanzeigers eingerichtet sein.

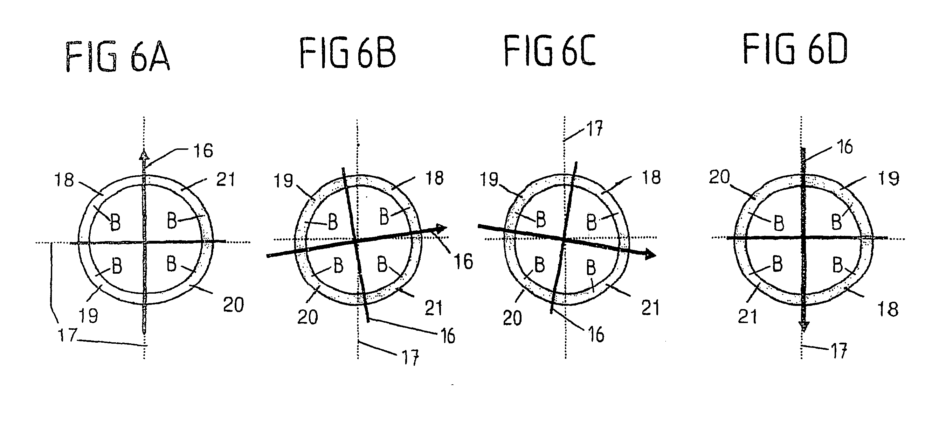

Die Berührbereiche B der ersten Bedienelemente 18, 20, 19 und 21 unterteilen somit den Lenkradkranz in vier Quadranten. Der Vorteil einer solchen Anordnung liegt in der Tatsache begründet, dass prinzipiell bei jedem Lenkwinkel des Lenkrades 1 jeweils auf der rechten und der linken Seite des Lenkrades 1 einer der Berührbereiche B zumindest abschnittsweise angeordnet ist. Dieser kann dann mittels der Steuerelektronik 3 zum Aktivieren oder Deaktivieren eines entsprechenden Fahrtrichtungsanzeigers herangezogen werden. Dieses Konzept ist schematisch in der Figur 6A bis 6D dargestellt.

Figur 6A zeigt im Zusammenhang mit Figur 6B, 6C und 6D eine schematische Draufsicht auf ein Lenkrad 1 der in der Figur 3 bis 5 gezeigten Art, mit vier einzeln betätigbaren, segmenthaften Berührbereichen B der ersten Bedienelemente 21, 20, 19 und 18, die ringförmig um den in den Figuren 6A bis 6D nicht dargestellten Lenkradkörper 14 angeordnet sind, und zwar in einer zur Erstreckungsebene des Lenkradkranzes 15 (der Lenkradkranz 15 ist in der Figur 6A bis 6D ebenfalls nicht gezeigt) parallelen Ebene, die zwischen jener Erstreckungsebene und der stationären Baugruppe 2 angeordnet ist. D.h., die Berührbereiche B umlaufen den Lenkradkörper 14 in der zur Erstreckungsebene des Lenkradkranzes 15 parallelen Ebene. Die Berührbereiche B sind insbesondere vom Lenkradkranz 15 beabstandet angeordnet. Dies ist vorteilhaft, da somit eine Trennung von Lenkvorgängen und Blinkvorgängen (Setzen und Rücksetzen eines Fahrtrichtungsanzeigers) möglich ist.

Die den Lenkradkörper 14 umgreifenden Berührbereiche B erstrecken sich jeweils entlang eines Viertels des Umfanges des Lenkradkörpers 14 in der zur Erstreckungsebene des Lenkradkranzes 15 parallelen Ebene und bilden somit einen Ring um den Lenkradkörper 14 aus. D.h, bei jedem Lenkwinkel des Lenkrades 1 befindet sich zumindest einer der Berührbereiche B vollständig auf der vorstehend definierten rechten (linken) Seite des Lenkrades 1 sowie ein weiterer, dazu benachbarter Berührbereich B mindestens zur Hälfte auf der rechten (linken) Seite des Lenkrades 1. Diese Berührbereiche B können von der Steuerelektronik 3 einem rechten (linken) Fahrtrichtungsanzeiger zugeordnet werden, so dass auf der rechten (linken) Seite des Lenkrades 1 immer zwei Berührbereiche B zur Verfügung stehen, über die ein rechter (linker) Fahrtrichtungsanzeiger gesetzt bzw. rückgesetzt werden kann.

Bei einem Lenkwinkel von 0°, wie in der Figur 6A gegeben, steuert die Steuerelektronik 3 dementsprechend die ersten Bedienelemente 21, 20 als Betätigungselemente eines rechten Fahrtrichtungsanzeigers an. In der Figur 6B und 6C (Lenkwinkel von ungefähr 90°) wären dies die Bedienelemente 18 und 21. Bei einem Lenkwinkel von 180° gemäß der Figur 6D steuert die Steuerelektronik 3 die ersten Bedienelemente 19 und 18 als Betätigungselemente eines rechten Fahrtrichtungsanzeigers an.

Um die einzelnen Berührbereiche B der ersten Bedienelemente 18, 19, 20 und 21 auf die vorstehend beschriebene Art anzusteuern, muss die Steuerelektronik 3 dazu ausgebildet sein, den Lenkwinkel zu bestimmen, d.h., den Winkel zwischen den Achsen eines stationären Koordinatensystems 17 und den gleichnamigen Achsen eines Koordinatensystems 16, welches in Bezug auf das Lenkrad 1 ruht. Dies geschieht mit Hilfe des Lenkwinkelsensors 5 auf bekannte Weise.

### Bezugszeichen

- 1: Lenkrad
- 2: Stationäre Baugruppe
- 3: Steuerelektronik
- 4: Signalübertragungseinheit
- 5: Lenkwinkelsensor
- 6: Betätigungselement
- 7: Joystick
- 8: Betätigungselement
- 9: Multiplex-Schnittstelle
- 10: Betätigungselement
- 11: Elektrische Verbindung
- 12: Speiche
- 13: Lenkradabdeckkappe
- 14: Lenkradkörper
- 15: Lenkradkranz
- 16: Koordinatensystem
- 17: Koordinatensystem
- 18: Erstes Bedienelement
- 19: Erstes Bedienelement
- 20: Erstes Bedienelement
- 21: Erstes Bedienelement
- 22: Anzeigeelement
- 23: Bedienkoordinatensystem
- 24: Joystick
- 25: Joystick
- B: Berührbereich

## Patentansprüche

1. Lenkradanordnung für ein Kraftfahrzeug, mit
- einem Lenkrad (1), welches drehbeweglich im Kraftfahrzeug anordenbar ist,
- einer eine Lenkachse definierenden, stationären Baugruppe (2), an der das Lenkrad (1) um die Lenkachse drehbar gelagert ist,
- am Lenkrad (1) angeordneten ersten Betätigungselementen (7, 8) zum Betätigen im oder am Kraftfahrzeug anordenbarer Funktionselemente des Kraftfahrzeuges, und
- mindestens einem zweiten Betätigungselement (10) zum Betätigen im oder am Kraftfahrzeug anordenbarer Funktionselemente des Kraftfahrzeuges, das an der stationären Baugruppe angeordnet ist,
**dadurch gekennzeichnet,**
**dass** eine zentrale, im Lenkrad (1) angeordnete Steuerelektronik (3) vorgesehen ist, die sowohl zur Steuerung der ersten Betätigungselemente (7, 8) als auch zur Steuerung des mindestens einen zweiten Betätigungselementes (10) eingerichtet ist.

2. Lenkradanordnung nach Anspruch 1, **dadurch gekennzeichnet, dass** ein Lenkwinkelsensor (5) vorgesehen ist, der zum Bestimmen des Lenkwinkels des Lenkrades (1) eingerichtet ist.

3. Lenkradanordnung nach Anspruch 2, **dadurch gekennzeichnet, dass** der Lenkwinkelsensor (5) am Lenkrad (1) angeordnet ist.

4. Lenkradanordnung nach Anspruch 2 oder 3, **dadurch gekennzeichnet, dass** der Lenkwinkelsensor (5) mit der Steuerelektronik (3) verbunden ist.

5. Lenkradanordnung nach Anspruch 4, **dadurch gekennzeichnet, dass** die Steuerelektronik (3) zur Steuerung des Lenkwinkelsensors (5) eingerichtet ist.

6. Lenkradanordnung nach einem der vorangegangenen Ansprüche, **dadurch gekennzeichnet, dass** die Steuerelektronik (3) dazu vorgesehen und eingerichtet ist, zumindest eines der ersten Betätigungselemente (7, 8) und / oder das zumindest eine zweite Betätigungselement (6, 10) mit Hilfe einer Auswahl der folgenden Informationen zu Steuern:
- des Lenkwinkels,
- einer Fahrtrichtung des Kraftfahrzeuges ,
- einer Geschwindigkeit des Kraftfahrzeuges,
- einer Drehrate des Lenkrades (1),
- einer Griffposition der Hände eines Fahrers am Lenkrad (1).

7. Lenkradanordnung nach einem der vorangegangenen Ansprüche, **dadurch gekennzeichnet, dass** die Steuerelektronik (3) über eine Signalübertragungseinheit (4) mit der stationären Baugruppe (2) verbunden ist.

8. Lenkradanordnung nach Anspruch 7, **dadurch gekennzeichnet, dass** die Steuerelektronik (3) zur Übertragung von Steuersignalen an eine Kraftfahrzeugsumgebung zumindest eine Multiplex-Schnittstelle (9) aufweist.

9. Lenkradanordnung nach einem der Ansprüche 2 bis 6 und Anspruch 7 oder 8, **dadurch gekennzeichnet, dass** die Steuerelektronik (3), der Lenkwinkelsensor (5) und die Signalübertragungseinheit (4) als ein einheitliches Modul in das Lenkrad (1) integriert sind.

10. Lenkradanordnung nach einem der vorangegangenen Ansprüche, **dadurch gekennzeichnet, dass** zumindest ein erstes am Lenkrad (1) angeordnetes Betätigungselement (7,8) entlang einer Vielzahl von Betätigungsrichtungen betätigbar ist, wobei den einzelnen Betätigungsrichtungen jeweils ein richtungsabhängiges Ausgangssignal zum Einwirken auf eine Kraftfahrzeugkomponente zugeordnet ist.

11. Lenkradanordnung nach Anspruch 10, **gekennzeichnet durch** eine Steuerelektronik zum Steuern des zumindest einen ersten Betätigungselementes (7,8) derart, dass die einzelnen Betätigungsrichtungen, entlang derer das erste Betätigungselement zum Erzeugen des jeweils zugeordneten Ausgangssignals betätigbar ist - bezogen auf ein fahrzeugfestes Koordinatensystem - unabhängig von einem momentanen Lenkwinkel des Lenkrades (1) konstant sind.

12. Lenkradanordnung nach Anspruch 11, **dadurch gekennzeichnet, dass** zur Erzeugung eines vorgegebenen, richtungsabhängigen Ausgangssignals das erste Betätigungselement (7, 8) unabhängig von dem momentanen Lenkwinkel jeweils entlang ein und derselben Betätigungsrichtung auszulenken ist.

13. Lenkradanordnung nach einem der Ansprüche 10 bis 12, **dadurch gekennzeichnet, dass** das zumindest eine erste Betätigungselement (7, 8) und / oder das zumindest eine zweite Betätigungselement (6, 10) als ein Joystick (24, 25) ausgebildet ist, mit einem Bedienhebel, der um eine Mehrzahl von Achsen in eine entsprechende Mehrzahl von Kipprichtungen kippbar ist, wobei die Achsen und die Kipprichtungen in einer gemeinsamen zweidimensionalen Bedienebene liegen.

14. Lenkradanordnung nach Anspruch 13, **dadurch gekennzeichnet, dass** sich die Achsen in einem Schnittpunkt schneiden.

15. Lenkradanordnung nach Anspruch 14, **dadurch gekennzeichnet, dass** der Schnittpunkt quer zur Lenkachse beabstandet zur Lenkachse angeordnet ist.

16. Lenkradanordnung nach einem der Ansprüche 13 bis 15, **dadurch gekennzeichnet, dass** die Kipprichtungen in einem relativ zum Joystick (24, 25) ruhenden, die Bedienebene aufspannenden Bedienkoordinatensystem (23), mit einer y-Achse und einer dazu orthogonalen x-Achse, eindeutig zweidimensionalen Vektoren zuordenbar sind.

17. Lenkradanordnung nach Anspruch 15 oder 16, **dadurch gekennzeichnet, dass** der Ursprung des Bedienkoordinatensystems (23) mit dem Schnittpunkt zusammenfällt.

18. Lenkradanordnung nach Anspruch 2 und Anspruch 16 oder 17, **dadurch gekennzeichnet, dass** bei einem am Lenkrad (1) angeordneten Joystick (24, 25) die Steuerelektronik (3) dazu vorgesehen und eingerichtet ist, mittels des Lenkwinkelsensors (5) das Bedienkoordinatensystem (23) derart auszurichten, dass die Orientierung der y-Achse unabhängig vom Lenkwinkel stets der Orientierung der y-Achse bei Geradeausfahrtstellung des Lenkrades (1) entspricht.

19. Lenkradanordnung nach einem der Ansprüche 13 bis 18, **dadurch gekennzeichnet, dass** ein Anzeigeelement (22) vorgesehen ist, welches zumindest zum Anzeigen der Kipprichtungen dient.

20. Lenkradanordnung nach Anspruch 19, **dadurch gekennzeichnet, dass** das Anzeigelement (22) am Lenkrad (1) angeordnet ist.

21. Lenkradanordnung nach Anspruch 20, **dadurch gekennzeichnet, dass** bei einem am Lenkrad (1) angeordneten Joystick (24, 25) das Anzeigeelement den Joystick (24, 25) umgibt.

22. Lenkradanordnung nach Anspruch 21, **dadurch gekennzeichnet, dass** das Anzeigeelement (22) konzentrisch zum Joystick (24, 25) angeordnet ist.

23. Lenkradanordnung nach einem der Ansprüche 19 bis 22, **dadurch gekennzeichnet, dass** das Anzeigeelement (22) eine Mehrzahl von Segmenten aufweist.

24. Lenkradanordnung nach den Ansprüchen 2, 19 und 23, **dadurch gekennzeichnet, dass** bei einem am Lenkrad (1) angeordneten Joystick (24, 25) die Steuerelektronik (3) dazu vorgesehen und eingerichtet ist, mittels des Lenkwinkelsensors (5) die einzelnen Segmente derart anzusteuern, dass eine Ausrichtung eines einer Kipprichtung zugeordneten Segmentes bezüglich des Ursprungs des Bedienkoordinatensystems (23) unabhängig vom momentanen Lenkwinkel des Lenkrades (1) ist.

25. Lenkradanordnung nach Anspruch 2 und einem der Ansprüche 3 bis 24, **dadurch gekennzeichnet, dass** die Steuerelektronik (3) dazu vorgesehen und eingerichtet ist, einen vor einem Deaktivieren der Steuerelektronik (3) mittels des Lenkwinkelsensors (5) bestimmten Lenkwinkel zu speichern.

26. Lenkradanordnung nach einem der vorangegangenen Ansprüche, **dadurch gekennzeichnet, dass** das Lenkrad (1) einen in einer Erstreckungsebene verlaufenden Lenkradkranz (15) aufweist, der über Speichen (12) mit einem Lenkradkörper (14) verbunden ist.

27. Lenkradanordnung nach Anspruch 26, **dadurch gekennzeichnet, dass** das Lenkrad (1) ein erstes Bedienelement (18, 19, 20, 21) aufweist, welches in Richtung der Lenkachse zwischen der Erstreckungsebene des Lenkradkranzes (15) und der stationären Baugruppe (2) am Lenkrad (1) gelagert ist.

28. Lenkradanordnung nach Anspruch 27, **dadurch gekennzeichnet, dass** das erste Bedienelement (18, 19, 20, 21) einen Berührbereich (B) aufweist, an dem das erste Bedienelement (18, 19, 20, 21) zum Betätigen des ersten Bedienelementes (18, 19, 20, 21) berührbar ist.

29. Lenkradanordnung nach Anspruch 28, **dadurch gekennzeichnet, dass** der Berührbereich (B) in einer parallel zur Erstreckungsebene des Lenkradkranzes (15) verlaufenden Ebene angeordnet ist.

30. Lenkradanordnung nach Anspruch 29, **dadurch gekennzeichnet, dass** der Berührbereich (B) zwischen dem Lenkradkranz (15) und einer Speiche (12) in der Ebene angeordnet ist.

31. Lenkradanordnung nach Anspruch 29 oder 30, **dadurch gekennzeichnet, dass** der Berührbereich (B) zwischen dem Lenkradkranz (15) und dem Lenkradkörper (14) in der Ebene angeordnet ist.

32. Lenkradanordnung nach einem der Ansprüche 27 bis 31, **dadurch gekennzeichnet, dass** das erste Bedienelement (18, 19, 20, 21) an einer Speiche beweglich gelagert ist.

33. Lenkradanordnung nach einem der Ansprüche 27 bis 31, **dadurch gekennzeichnet, dass** das erste Bedienelement (18, 19, 20, 21) am Lenkradkörper (14) beweglich gelagert ist.

34. Lenkradanordnung nach einem der Ansprüche 28 bis 31 und Anspruch 32 oder 33, **dadurch gekennzeichnet, dass** das erste Bedienelement (18, 19, 20, 21) derart am Lenkrad (1) gelagert ist, dass der Berührbereich (B) entlang einer parallel zur Lenkachse orientierten Richtung bewegbar ist.

35. Lenkradanordnung nach Anspruch 27 bis 29 und einem der Ansprüche 30 bis 34, **dadurch gekennzeichnet, dass** das Lenkrad (1) weitere erste Bedienelemente (18, 19, 20, 21) aufweist, und dass die weiteren ersten Bedienelemente (18, 19, 20, 21) jeweils einen weiteren Berührbereich (B) aufweisen, wobei die weiteren Berührbereiche (B) in der Ebene angeordnet sind, in der der Berührbereich (B) des ersten Bedienelementes (18,19, 20, 21) angeordnet ist.

36. Lenkradanordnung nach Anspruch 26 und Anspruch 35, **dadurch gekennzeichnet, dass** der Berührbereich (B) des einen ersten Bedienelementes (18, 19, 20, 21) und die weiteren Berührbereiche (B) der weiteren ersten Bedienelemente (18, 19, 20, 21) derart entlang des Lenkradkörpers (14) angeordnet sind, dass unabhängig vom momentanen Lenkwinkel des Lenkrades (1) ein überwiegender Teil zumindest eines ersten der Berührbereiche (B) von einem Fahrer aus betrachtet auf einer rechten Seite des Lenkrades (1) angeordnet ist, und dass unabhängig vom momentanen Lenkwinkel des Lenkrades (1) ein überwiegender Teil zumindest eines zweiten der Berührbereiche (B) vom Fahrer aus betrachtet auf einer linken Seite des Lenkrades (1) angeordnet ist.

37. Lenkradanordnung nach Anspruch 2 und Anspruch 36, **dadurch gekennzeichnet, dass** die Steuerelektronik (3) dazu vorgesehen und eingerichtet ist, mittels des Lenkwinkelsensors (5) das erste Bedienelement (18, 19, 20, 21) und die weiteren ersten Bedienelemente (18, 19, 20, 21) derart anzusteuern, dass auf Grund einer Betätigung des zumindest einen ersten Berührbereiches eine Fahrrichtungsanzeige des Kraftfahrzeuges unabhängig vom Lenkwinkel eine Fahrtrichtungsänderung nach links anzeigt, und dass unabhängig vom Lenkwinkel eine Fahrrichtungsanzeige des Kraftfahrzeuges auf Grund einer Betätigung des zumindest einen zweiten Berührbereiches eine Fahrtrichtungsänderung nach rechts anzeigt.

38. Lenkradanordnung nach Anspruch 1 und einem der Ansprüche 27 bis 37, **dadurch gekennzeichnet, dass** das erste Bedienelement (18, 19, 20, 21) und / oder die weiteren ersten Bedienelemente (18, 19, 20, 21) zur Gruppe der ersten Betätigungselemente (7, 8) gehören.

39. Lenkradanordnung nach einem der vorangegangenen Ansprüche, **dadurch gekennzeichnet, dass** das Lenkrad (1) ein zweites Bedienelement aufweist, welches derart am Lenkrad gelagert ist, dass seine Orientierung im Raum beim Drehen des Lenkrades (1) unverändert bleibt.

40. Lenkradanordnung nach Anspruch 39, **dadurch gekennzeichnet, dass** das zweite Bedienelement an einem Element des Lenkrades (1) angeordnet ist, welches derart beweglich am Lenkrad (1) gelagert ist, dass seine räumliche Orientierung unabhängig vom Lenkwinkel des Lenkrades (1) ist.

41. Lenkradanordnung nach einem der Ansprüche 2 bis 5 und Anspruch 39 oder 40, **dadurch gekennzeichnet, dass** die Steuerelektronik (3) dazu vorgesehen und eingerichtet ist, mittels des Lenkwinkelsensors (5) die Orientierung des Elementes des Lenkrades (1) derart zu steuern, dass sie unabhängig vom momentanen Lenkwinkel des Lenkrades (1) ist.

42. Lenkradanordnung nach Anspruch 40 oder 41, **dadurch gekennzeichnet, dass** das Element zentral am Lenkrad (1) angeordnet ist.

43. Lenkradanordnung nach einem der Ansprüche 39 bis 42, **dadurch gekennzeichnet, dass** Element ein Teil des Lenkradkörpers (14), insbesondere ein am Lenkradkörper (14) gelagertes Airbagmodul ist.

44. Lenkradanordnung nach Anspruch 1 und einem der Ansprüche 39 bis 43, **dadurch gekennzeichnet, dass** das zweite Bedienelement zur Gruppe der ersten Betätigungselemente (7, 8) gehört.

45. Lenkradanordnung nach einem der vorangegangenen Ansprüche, **dadurch gekennzeichnet, dass** die ersten Betätigungselemente (7, 8) und das zumindest eine zweite Betätigungselement (6, 10) zum Betätigen einer Auswahl der folgenden im oder am Kraftfahrzeug anordenbarer Funktionselemente eingerichtet sind:
- eines Fahrtrichtungsanzeigers,
- einer Hupe,
- eines Radios,
- eines Tempomats,
- eines Scheibenwischers,
- einer Beleuchtung des Kraftfahrzeuges.

## Claims

1. A steering wheel arrangement for a motor vehicle, having
- a steering wheel (1), which may be arranged in the motor vehicle in a rotationally movable manner,
- a fixed component (2) that defines a steering axis and on which the steering wheel (1) is mounted such that it may rotate about the steering axis,
- first actuating elements (7, 8) that are arranged on the steering wheel (1), for actuating functional elements of the motor vehicle, which may be arranged in or on the motor vehicle, and
- at least one second actuating element (10) for actuating functional elements of the motor vehicle, which may be arranged in or on the motor vehicle, this actuating element being arranged on the fixed component,
**characterized**
**in that** a central control electronics unit (3) is provided, which is arranged in the steering wheel (1) and is set up both to control the first actuating elements (7, 8) and to control the at least one second actuating element (10).

2. The steering wheel arrangement as claimed in claim 1, **characterized in that** a steering angle sensor (5) is provided, which is set up to determine the steering angle of the steering wheel (1).

3. The steering wheel arrangement as claimed in claim 2, **characterized in that** the steering angle sensor (5) is arranged on the steering wheel (1).

4. The steering wheel arrangement as claimed in claim 2 or 3, **characterized in that** the steering angle sensor (5) is connected to the control electronics unit (3).

5. The steering wheel arrangement as claimed in claim 4, **characterized in that** the control electronics unit (3) is set up to control the steering angle sensor (5).

6. The steering wheel arrangement as claimed in one of the preceding claims, **characterized in that** the control electronics unit (3) is provided and set up to control at least one of the first actuating elements (7, 8) and/or the at least one second actuating element (6, 10) with the aid of a selection of the following information:
- the steering angle,
- a direction of travel of the motor vehicle,
- a speed of the motor vehicle,
- a rate of rotation of the steering wheel (1), or
- a position in which the hands of a driver hold the steering wheel (1).

7. The steering wheel arrangement as claimed in one of the preceding claims, **characterized in that** the control electronics unit (3) is connected to the fixed component (2) by way of a signal transmission unit (4).

8. The steering wheel arrangement as claimed in claim 7, **characterized in that** the control electronics unit (3) has at least one multiplex interface (9) for transmitting control signals to a motor vehicle environment.

9. The steering wheel arrangement as claimed in one of claims 2 to 6 and claim 7 or 8, **characterized in that** the control electronics unit (3), the steering angle sensor (5) and the signal transmission unit (4) form a unitary module that may be integrated in the steering wheel (1).

10. The steering wheel arrangement as claimed in one of the preceding claims, **characterized in that** at least one first actuating element (7, 8), which is arranged on the steering wheel (1), is actuable in a plurality of actuating directions, a respective direction-dependent output signal being associated with the individual actuating directions for acting on a motor vehicle component.

11. The steering wheel arrangement as claimed in claim 10, **characterized by** a control electronics unit for controlling the at least one first actuating element (7, 8), such that the individual actuating directions in which the first actuating element may be actuated in order to generate the respectively associated output signal - in relation to a coordinate system that is fixed with respect to the vehicle - are constant, regardless of the current steering angle of the steering wheel (1).

12. The steering wheel arrangement as claimed in claim 11, **characterized in that**, to generate a predetermined, direction-dependent output signal, the first actuating element (7, 8) has to be deflected, regardless of the current steering angle, in one and the same direction of actuation in each case.

13. The steering wheel arrangement as claimed in one of claims 10 to 12, **characterized in that** the at least one first actuating element (7, 8) and/or the at least one second actuating element (6, 10) take the form of a joystick (24, 25) having an operating lever that may be tilted about a plurality of axes in a corresponding plurality of tilting directions, the axes and the tilting directions lying in a common two-dimensional operating plane.

14. The steering wheel arrangement as claimed in claim 13, **characterized in that** the axes intersect at a point of intersection.

15. The steering wheel arrangement as claimed in claim 14, **characterized in that** the point of intersection is arranged transversely with respect to the steering axis and at a spacing from the steering axis.

16. The steering wheel arrangement as claimed in one of claims 13 to 15, **characterized in that** the tilting directions may be unambiguously associated with two-dimensional vectors in an operating coordinate system (23) that is stationary in relation to the joystick (24, 25), that spans the operating plane and that has a y axis and an x axis at a right angle thereto.

17. The steering wheel arrangement as claimed in claim 15 or 16, **characterized in that** the origin of the operating coordinate system (23) coincides with the point of intersection.

18. The steering wheel arrangement as claimed in claim 2 and claim 16 or 17, **characterized in that**, with a joystick (24, 25) arranged on the steering wheel (1), the control electronics unit (3) is provided and set up to align the operating coordinate system (23) by means of the steering angle sensor (5) such that the orientation of the y axis always corresponds to the orientation of the y axis in the straight-ahead position of the steering wheel (1), regardless of the steering angle.

19. The steering wheel arrangement as claimed in one of claims 13 to 18, **characterized in that** a display element (22) that serves at least to display the tilting directions is provided.

20. The steering wheel arrangement as claimed in claim 19, **characterized in that** the display element (22) is arranged on the steering wheel (1).

21. The steering wheel arrangement as claimed in claim 20, **characterized in that**, with a joystick (24, 25) arranged on the steering wheel (1), the display element surrounds the joystick (24, 25).

22. The steering wheel arrangement as claimed in claim 21, **characterized in that** the display element (22) is arranged concentrically with respect to the joystick (24, 25).

23. The steering wheel arrangement as claimed in one of claims 19 to 22, **characterized in that** the display element (22) has a plurality of segments.

24. The steering wheel arrangement as claimed in claims 2, 19 and 23, **characterized in that**, with a joystick (24, 25) arranged on the steering wheel (1), the control electronics unit (3) is provided and set up for controlling the individual segments by means of the steering angle sensor (5) such that the alignment of a segment that is associated with a tilting direction, in relation to the origin of the operating coordinate system (23), is independent of the current steering angle of the steering wheel (1).

25. The steering wheel arrangement as claimed in claim 2 and one of claims 3 to 24, **characterized in that** the control electronics unit (3) is provided and set up for storing a steering angle that is determined by means of the steering angle sensor (5) before the control electronics unit (3) is deactivated.

26. The steering wheel arrangement as claimed in one of the preceding claims, **characterized in that** the steering wheel (1) has a steering wheel ring (15) that extends in a plane of extent and is connected by spokes (12) to a steering wheel body (14).

27. The steering wheel arrangement as claimed in claim 26, **characterized in that** the steering wheel (1) has a first operating element (18, 19, 20, 21) that is mounted in the direction of the steering axis between the plane of extent of the ring (15) of the steering wheel and the fixed component (2) on the steering wheel (1).

28. The steering wheel arrangement as claimed in claim 27, **characterized in that** the first operating element (18, 19, 20, 21) has a contact region (B), at which the first operating element (18, 19, 20, 21) may be touched for actuation of the first operating element (18, 19, 20, 21).

29. The steering wheel arrangement as claimed in claim 28, **characterized in that** the contact region (B) is arranged in a plane that extends parallel to the plane of extent of the ring (15) of the steering wheel.

30. The steering wheel arrangement as claimed in claim 29, **characterized in that** the contact region (B) is arranged in the plane between the ring (15) of the steering wheel and a spoke (12).

31. The steering wheel arrangement as claimed in claim 29 or 30, **characterized in that** the contact region (B) is arranged in the plane between the ring (15) of the steering wheel and the body (14) of the steering wheel.

32. The steering wheel arrangement as claimed in one of claims 27 to 31, **characterized in that** the first operating element (18, 19, 20, 21) is mounted such that it is movable on a spoke.

33. The steering wheel arrangement as claimed in one of claims 27 to 31, **characterized in that** the first operating element (18, 19, 20, 21) is mounted such that it is movable on the body (14) of the steering wheel.

34. The steering wheel arrangement as claimed in one of claims 28 to 31 and claim 32 or 33, **characterized in that** the first operating element (18, 19, 20, 21) is mounted on the steering wheel (1) such that the contact region (B) is movable in a direction that is oriented parallel to the steering axis.

35. The steering wheel arrangement as claimed in claim 27 to 29 and one of claims 30 to 34, **characterized in that** the steering wheel (1) has further first operating elements (18, 19, 20, 21), and **in that** the further first operating elements (18, 19, 20, 21) each have a further contact region (B), the further contact regions (B) being arranged in the plane in which the contact region (B) of the first operating element (18, 19, 20, 21) is arranged.

36. The steering wheel arrangement as claimed in claim 26 and claim 35, **characterized in that** the contact region (B) of the one first operating element (18, 19, 20, 21) and the further contact regions (B) of the further first operating elements (18, 19, 20, 21) are arranged over the steering wheel body (14), in such a way that the majority of at least a first one of the contact regions (B) is arranged on a right-hand side of the steering wheel (1), as seen by a driver, regardless of the current steering angle of the steering wheel (1), and that the majority of at least a second one of the contact regions (B) is arranged on a left-hand side of the steering wheel (1), as seen by the driver, regardless of the current steering angle of the steering wheel (1).

37. The steering wheel arrangement as claimed in claim 2 and claim 36, **characterized in that** the control electronics unit (3) is provided and set up for controlling the first operating element (18, 19, 20, 21) and the further first operating elements (18, 19, 20, 21) by means of the steering angle sensor (5) such that, based on actuation of the at least one first contact region, a display of the direction of travel of the motor vehicle displays a change in the direction of travel to the left regardless of the steering angle, and that, based on actuation of the at least one second contact region, a display of the direction of travel of the motor vehicle displays a change in the direction of travel to the right regardless of the steering angle.

38. The steering wheel arrangement as claimed in claim 1 and one of claims 27 to 37, **characterized in that** the first operating element (18, 19, 20, 21) and/or the further first operating elements (18, 19, 20, 21) are part of the group of the first actuating elements (7, 8).

39. The steering wheel arrangement as claimed in one of the preceding claims, **characterized in that** the steering wheel (1) has a second operating element, which is mounted on the steering wheel, such that its orientation in space remains unchanged when the steering wheel (1) is rotated.

40. The steering wheel arrangement as claimed in claim 39, **characterized in that** the second operating element is arranged on an element of the steering wheel (1) that is mounted to be movable on the steering wheel (1) such that its spatial orientation is independent of the steering angle of the steering wheel (1).

41. The steering wheel arrangement as claimed in one of claims 2 to 5 and claim 39 or 40, **characterized in that** the control electronics unit (3) is provided and set up for controlling the orientation of the element of the steering wheel (1) by means of the steering angle sensor (5), such that it is independent of the current steering angle of the steering wheel (1).

42. The steering wheel arrangement as claimed in claim 40 or 41, **characterized in that** the element is arranged centrally on the steering wheel (1).

43. The steering wheel arrangement as claimed in one of claims 39 to 42, **characterized in that** the element is part of the steering wheel body (14), in particular an airbag module which is mounted on the steering wheel body (14).

44. The steering wheel arrangement as claimed in claim 1 and one of claims 39 to 43, **characterized in that** the second operating element is part of the group of the first actuating elements (7, 8).

45. The steering wheel arrangement as claimed in one of the preceding claims, **characterized in that** the first actuating elements (7, 8) and the at least one second actuating element (6, 10) are set up to actuate a selection of the following functional elements, which may be arranged in or on the motor vehicle:
- a direction indicator,
- a horn,
- a radio,
- a cruise control,
- a windscreen wiper,
- lights for the motor vehicle.

## Revendications

1. Système de volant de direction pour un véhicule automobile, comprenant
- un volant de direction (1), lequel est disposé de manière mobile en rotation dans le véhicule automobile,
- un ensemble stationnaire (2) définissant un essieu directeur, ensemble sur lequel le volant de direction (1) est logé de manière à pouvoir tourner autour de l'essieu directeur,
- des premiers éléments d'actionnement (7, 8) disposés sur le volant de direction (1) destinés à actionner des éléments fonctionnels du véhicule automobile pouvant être disposés dans ou sur le véhicule automobile, et
- au moins un second élément d'actionnement (10) destiné à actionner les éléments fonctionnels du véhicule automobile pouvant être disposés dans ou sur le véhicule automobile, lequel élément est disposé sur l'ensemble stationnaire,
**caractérisé en ce**
**qu'**il est prévu une commande électronique (3) centrale disposée dans le volant de direction (1) qui est réglée aussi bien pour commander les premiers éléments d'actionnement (7, 8) que pour commander le au moins un second élément d'actionnement (10).

2. Système de volant de direction selon la revendication 1, **caractérisé en ce qu'**il est prévu un capteur d'angle de direction (5) qui est réglé pour définir l'angle de direction du volant de direction (1).

3. Système de volant de direction selon la revendication 2, **caractérisé en ce que** le capteur d'angle de direction (5) est disposé sur le volant de direction (1).

4. Système de volant de direction selon la revendication 2 ou 3, **caractérisé en ce que** le capteur d'angle de direction (5) est relié à la commande électronique (3).

5. Système de volant de direction selon la revendication 4, **caractérisé en ce que** la commande électronique (3) est réglée pour commander le capteur d'angle de direction (5).

6. Système de volant de direction selon l'une quelconque des revendications précédentes, **caractérisé en ce que** la commande électronique (3) est prévue et réglée pour commander au moins un des premiers éléments d'actionnement (7, 8) et/ou le au moins un second élément d'actionnement (6, 10) au moyen d'une sélection des informations suivantes:
- l'angle de direction,
- un sens de marche du véhicule automobile,
- une vitesse du véhicule automobile,
- une vitesse de rotation du volant de direction (1),
- une position d'enserrement du volant de direction (1) par les mains d'un conducteur.

7. Système de volant de direction selon l'une quelconque des revendications précédentes, **caractérisé en ce que** la commande électronique (3) est reliée par une unité de transmission de signal (4) à l'ensemble stationnaire (2).

8. Système de volant de direction selon la revendication 7, **caractérisé en ce que** la commande électronique (3) destinée à transmettre des signaux de commande comprend au moins une interface de multiplexage (9) sur les composants environnants du véhicule automobile.

9. Système de volant de direction selon l'une quelconque des revendications 2 à 6 et la revendication 7 ou 8, **caractérisé en ce que** la commande électronique (3), le capteur d'angle de direction (5) et l'unité de transmission de signal (4) sont intégrés dans le volant de direction (1) en formant un module monobloc.

10. Système de volant de direction selon l'une quelconque des revendications précédentes, **caractérisé en ce qu'**au moins un premier élément d'actionnement (7, 8) disposé sur le volant de direction (1) peut être actionné le long d'une pluralité de directions d'actionnement, respectivement un signal de sortie dépendant de la direction, destiné à agir sur une composante de véhicule automobile, étant associé aux directions d'actionnement individuelles.

11. Système de volant de direction selon la revendication 10, **caractérisé par** une commande électronique destinée à commander le au moins un premier élément d'actionnement (7, 8) de telle sorte que les directions d'actionnement individuelles, le long desquelles le premier élément d'actionnement destiné à produire le signal de sortie respectivement associé peut être actionné - par rapport à un système de coordonnées fixé sur le véhicule - sont constantes indépendamment d'un angle d'inclinaison momentané du volant de direction (1).

12. Système de volant de direction selon la revendication 11, **caractérisé en ce que** pour produire un signal de sortie prédéfini, dépendant de la direction, le premier élément d'actionnement (7, 8) peut être dévié indépendamment de l'angle d'inclinaison momentané respectivement le long d'une seule et même direction d'actionnement.

13. Système de volant de direction selon l'une quelconque des revendications 10 à 12, **caractérisé en ce que** le au moins un premier élément d'actionnement (7, 8) et/ou le au moins un second élément d'actionnement (6, 10) sont réalisés comme une manette de commande (24, 25), comprenant un levier de commande qui peut être basculé autour d'une pluralité d'axes dans une pluralité correspondante de directions de basculement, les axes et les directions de basculement se situant dans un plan de commande bidimensionnel commun.

14. Système de volant de direction selon la revendication 13, **caractérisé en ce que** les axes se coupent en un point d'intersection.

15. Système de volant de direction selon la revendication 14, **caractérisé en ce que** le point d'intersection est disposé transversalement à l'essieu directeur à distance de l'essieu directeur.

16. Système de volant de direction selon l'une quelconque des revendications 13 à 15, **caractérisé en ce que** les directions de basculement dans un système de coordonnées de commande (23) reposant par rapport à la manette de commande (24, 25), couvrant le plan de commande, comprenant un axe y et un axe x perpendiculaire à celui-ci, peuvent être associées à des vecteurs clairement bidimensionnels.

17. Système de volant de direction selon la revendication 15 ou 16, **caractérisé en ce que** l'origine du système de coordonnées de commande (23) coïncide avec le point d'intersection.

18. Système de volant de direction selon la revendication 2 et la revendication 16 ou 17, **caractérisé en ce que**, lorsque la manette de commande (24, 25) est disposée sur le volant de direction (1), la commande électronique (3) est prévue et réglée pour orienter le système de coordonnées de commande (23) au moyen du capteur d'angle de direction (5) de telle sorte que l'orientation de l'axe y, indépendamment de l'angle de direction, correspond en permanence à l'orientation de l'axe y lorsque le volant de direction (1) est en position de trajectoire rectiligne.

19. Système de volant de direction selon l'une quelconque des revendications 13 à 18, **caractérisé en ce qu'**un élément d'affichage (22) est prévu, lequel sert au moins à afficher les directions de basculement.

20. Système de volant de direction selon la revendication 19, **caractérisé en ce que** l'élément d'affichage (22) est disposé sur le volant de direction (1).

21. Système de volant de direction selon la revendication 20, **caractérisé en ce que** l'élément d'affichage entoure la manette de commande (24, 25) lorsque la manette de commande (24, 25) est disposée sur le volant de direction (1).

22. Système de volant de direction selon la revendication 21, **caractérisé en ce que** l'élément d'affichage (22) est disposé de manière concentrique par rapport à la manette de commande (24, 25).

23. Système de volant de direction selon l'une quelconque des revendications 19 à 22, **caractérisé en ce que** l'élément d'affichage (22) comprend une pluralité de segments.

24. Système de volant de direction selon l'une quelconque des revendications 2, 19 et 23, **caractérisé en ce que** lorsque la manette de commande (24, 25) est disposée sur le volant de direction (1), la commande électronique (3) est prévue et réglée pour commander les segments individuels au moyen de l'angle de capteur de direction (5) de telle sorte qu'une orientation d'un segment associé à une direction de basculement par rapport à l'origine du système de coordonnées de commande (23) est indépendante de l'angle de direction momentané du volant de direction (1).

25. Système de volant de direction selon la revendication 2 et selon l'une quelconque des revendications 3 à 24, **caractérisé en ce que** la commande électronique (3) est prévue et réglée pour mémoriser un angle d'inclinaison défini avant la désactivation de la commande électronique (3) au moyen du capteur d'angle de direction (5).

26. Système de volant de direction selon l'une quelconque des revendications précédentes, **caractérisé en ce que** le volant de direction (1) comprend une couronne de volant de direction (15) s'étendant dans un plan d'extension, laquelle couronne est reliée par des rayons (12) à un corps de volant de direction (14).

27. Système de volant de direction selon la revendication 26, **caractérisé en ce que** le volant de direction (1) comprend un premier élément de commande (18, 19, 20, 21), lequel est logé sur le volant de direction (1) en direction de l'essieu directeur entre le plan d'extension de la couronne de volant de direction (15) et l'ensemble stationnaire (2).

28. Système de volant de direction selon la revendication 27, **caractérisé en ce que** le premier élément de commande (18, 19, 20, 21) comprend une zone de contact (B) sur laquelle le premier élément de commande (18, 19, 20, 21) destiné à actionner le premier élément de commande (18, 19, 20, 21) peut être mis en contact.

29. Système de volant de direction selon la revendication 28, **caractérisé en ce que** la zone de contact (B) est disposée dans un plan s'étendant parallèlement au plan d'extension de la couronne de volant de direction (15).

30. Système de volant de direction selon la revendication 29, **caractérisé en ce que** la zone de contact (B) est disposée dans le plan entre la couronne de volant de direction (15) et une branche (12).

31. Système de volant de direction selon la revendication 29 ou 30, **caractérisé en ce que** la zone de contact (B) est disposée dans le plan entre la couronne de volant de direction (15) et le corps de volant de direction (14).

32. Système de volant de direction selon l'une quelconque des revendications 27 à 31, **caractérisé en ce que** le premier élément de commande (18, 19, 20, 21) est logé de manière mobile sur une branche.

33. Système de volant de direction selon l'une quelconque des revendications 27 à 31, **caractérisé en ce que** le premier élément de commande (18, 19, 20, 21) est logé de manière mobile sur le corps de volant de direction (14).

34. Système de volant de direction selon l'une quelconque des revendications 28 à 31 et la revendication 32 ou 33, **caractérisé en ce que** le premier élément de commande (18, 19, 20, 21) est logé sur le volant de direction (1) de telle sorte la zone de contact (B) est mobile le long d'une direction orientée parallèlement à l'essieu directeur.

35. Système de volant de direction selon les revendications 27 à 29 et selon l'une quelconque des revendications 30 à 34, **caractérisé en ce que** le volant de direction (1) comprend d'autres premiers éléments de commande (18, 19, 20, 21), et **en ce que** les autres premiers éléments de commande (18, 19, 20, 21) comprennent respectivement une autre zone de contact (B), les autres zones de contact (B) étant disposées dans le plan dans lequel la zone de contact (B) du premier élément de commande (18, 19, 20, 21) est disposée.

36. Système de volant de direction selon la revendication 26 et la revendication 35, **caractérisé en ce que** la zone de contact (B) d'un des premiers éléments de commande (18, 19, 20, 21) et les autres zones de contact (B) des autres premiers éléments de commande (18, 19, 20, 21) sont disposées le long du corps de volant de direction (14) de telle sorte qu'indépendamment de l'angle de direction momentané du volant de direction (1), une majeure partie d'au moins une première des zones de contact (B), du point de vue d'un conducteur, est disposée sur un côté droit du volant de direction (1), et **en ce qu'**indépendamment de l'angle de direction momentané du volant de direction (1) une majeure partie d'au moins une seconde des zones de contact (B) du point de vue du conducteur est disposée sur un côté gauche du volant de direction (1).

37. Système de volant de direction selon la revendication 2 et la revendication 36, **caractérisé en ce que** la commande électronique (3) est prévue et réglée pour commander le premier élément de commande (18, 19, 20, 21) et les autres premiers éléments de commande (18, 19, 20, 21) au moyen du capteur d'angle de direction (5) de telle sorte que sur la base d'un actionnement de la au moins une première zone de contact, un indicateur de sens de marche du véhicule automobile affiche indépendamment de l'angle de direction une modification du sens de marche vers la gauche, et **en ce qu'**indépendamment de l'angle d'inclinaison, un indicateur du sens de marche du véhicule automobile sur la base d'un actionnement de la au moins une seconde zone de contact indique une modification du sens de marche vers la droite.

38. Système de volant de direction selon la revendication 1 et selon l'une quelconque des revendications 27 à 37, **caractérisé en ce que** le premier élément de commande (18, 19, 20, 21) et/ou les autres premiers éléments de commande (18, 19, 20, 21) font partie du groupe des premiers éléments d'actionnement (7, 8).

39. Système de volant de direction selon l'une quelconque des revendications précédentes, **caractérisé en ce que** le volant de direction (1) comprend un second élément de commande, lequel est logé sur le volant de direction de telle sorte que son orientation dans l'espace reste identique lorsque le volant de direction (1) est tourné.

40. Système de volant de direction selon la revendication 39, **caractérisé en ce que** le second élément de commande est disposé sur un élément du volant de direction (1), lequel est logé de manière mobile sur le volant de direction (1) de telle sorte que son orientation dans l'espace est indépendante de l'angle d'inclinaison du volant de direction (1).

41. Système de volant de direction selon l'une quelconque des revendications 2 à 5 et selon la revendication 39 ou 40, **caractérisé en ce que** la commande électronique (3) est prévue et réglée pour commander l'orientation de l'élément du volant de direction (1) au moyen du capteur d'angle de direction (5) de telle sorte qu'elle est indépendante de l'angle de direction momentané du volant de direction (1).

42. Système de volant de direction selon la revendication 40 ou 41, **caractérisé en ce que** l'élément est disposé de manière centrale sur le volant de direction (1).

43. Système de volant de direction selon l'une quelconque des revendications 39 à 42, **caractérisé en ce que** l'élément fait partie du corps de volant de direction (14), est en particulier un module de coussin gonflable logé sur le corps de volant de direction (14).

44. Système de volant de direction selon la revendication 1 et selon l'une quelconque des revendications 39 à 43, **caractérisé en ce que** le second élément de commande fait partie du groupe des premiers éléments d'actionnement (7, 8).

45. Système de volant de direction selon l'une quelconque des revendications précédentes, **caractérisé en ce que** les premiers éléments d'actionnement (7, 8) et le au moins un second élément d'actionnement (6, 10) sont réglés pour actionner une sélection des éléments fonctionnels suivants pouvant être disposés dans ou sur le véhicule automobile :
- un indicateur du sens de marche,
- un avertisseur,
- une radio,
- un régulateur de vitesse,
- un essuie-glace,
- un éclairage du véhicule automobile.
